# EUROPÄISCHE PATENTSCHRIFT

(11) **EP 2 118 644 B1**
(45) Veröffentlichungstag und Bekanntmachung des Hinweises auf die Patenterteilung: **18.09.2013**
(21) Anmeldenummer: 08708943.9
(22) Anmeldetag: 13.02.2008
(51) Int. Cl.: G01N 27/28

(54) **MODULARES MESSGERÄT**
MODULAR MEASURING DEVICE
APPAREIL DE MESURE MODULAIRE

(30) Priorität: 15.02.2007 DE 102007008072
(43) Veröffentlichungstag der Anmeldung: 18.11.2009
(73) Patentinhaber: Endress+Hauser Conducta Gesellschaft für Mess- und Regeltechnik mbH+Co. KG, 70839 Gerlingen (DE)
(72) Erfinder: AUERSWALD, Lothar, 04720 Döbeln (DE); FIKUS, Axel, 04746 Hartha (DE); PECHSTEIN, Torsten, 01445 Radebeul (DE)
(74) Vertreter: Andres, Angelika Maria
(86) Internationale Anmeldenummer: PCT/EP2008/051723
(87) Internationale Veröffentlichungsnummer: WO 2008/098954

(56) Entgegenhaltungen:
- DE-A1- 3 242 456
- DE-A1- 4 111 049
- DE-A1- 10 233 902
- DE-A1- 10 359 885
- US-A- 2 563 062

## Beschreibung

Die vorliegende Erfindung betrifft modulare Messgeräte, insbesondere potentiometrische Messgeräte, amperometrische Messgeräte, Leitfähigkeitsmessgeräte, Trübungsmessgeräte und Messgeräte für andere physikalische bzw. chemische Messgrößen, insbesondere im Bereich der industriellen Prozessmesstechnik.

Die Anmelderin fertigt beispielsweise ein pH-Messgerät unter der Bezeichnung "Memosens", welches als Sensorbaugruppe eine pH-Einstabmesskette umfasst, auf der eine Elektronikbaugruppe mit einer induktiv koppelnden Schnittstelle für Daten und Energie montiert ist. Zur Montage werden zunächst Schaltungskomponenten der Elektronikbaugruppe mittels einer Montagehülse auf der Einstabmesskette montiert, und mit den Leitungen für Temperaturmessung, pH-Potential und Referenzpotential verbunden. Danach wird ein Schirmungselement um die Schaltungskomponenten der Elektronikbaugruppe montiert

Schließlich wird das Elektronikgehäuse zum Schutz der Schaltung aufgesetzt und zur Einstabmesskette hin abgedichtet. Im Ergebnis ist an dem fertigen pH-Messgerät nichts auszusetzen. Es besteht jedoch der Bedarf, das Messgerät dahingehend zu optimieren, dass es einfacher gefertigt werden kann.

Ein modulares pH-Messgerät mit intepraler Schirmung wird auch in DE 4 111 049 beschrieben.

Es ist daher die Aufgabe der vorliegenden Erfindung, ein modulares Messgerät anzugeben, welches die Nachteile des Stands der Technik überwindet. Die Aufgabe wird gelöst durch das modulare Messgerät mit integraler Schirmung, gemäß des unabhängigen Patentanspruchs 1.

Die Schirmung kann beispielsweise einen geschlossenen oder

durchbrochenen leitfähigen Film, insbesondere Metallfilm, aufweisen, der an einer Gehäuseinnenwand aufgebracht ist oder als eine Zwischenlage zwischen zwei bestimmungsgemäß nicht zu trennenden Kunststoffschichten der Gehäusewand. Weiterhin kann die Schirmung einen Metallkäfig umfassen, der bei der Herstellung des Gehäusekörpers vollständig von Kunststoff umgossen wurde.

Zur Kontaktierung einer von Kunststoff abgedeckten Schirmung kann eine Bohrung durch die Gehäusewand bzw. ein Sackloch in die Gehäusewand gebohrt werden.

Erfindungsgemäß ist das Gehäuse zweiteilig. Es umfasst eine Elektronikkapsel und eine Kopplungshülse. Die

Elektronikkapsel und die Kopplungshülse weisen eine erfindungsgemäße Schirmung auf. Die Hülse umschließt jeweils einen Endabschnitt der Elektronikkapsel und des Sensormoduls.

Das Sensormodul des erfindungsgemäßen Messgeräts kann insbesondere einen potentiometrischen-Sensor, einen amperometrischen Sensor, einen photometrischen Sensor, einen spektrometrischen Sensor, einen Trübungssensor, einen Leitfähigkeitssensor, einen Drucksensor oder einen Temperatursensor umfassen. Der potentiometrische Sensor umfasst insbesondere eine pH-Elektroden, eine Referenzelektrode, eine Einstabmesskette oder einen ISFET-Sensor.

Das Elektronikmodul weist in einer derzeit bevorzugten Ausgestaltung einen ND-Wandler, einen Mikroprozessor zur Aufbereitung von digitalisierten Signalen des Sensormoduls und eine Schnittstelle zur digitalen Kommunikation mit einer übergeordneten Einheit auf. Die Schnittstelle ist beispielsweise eine galvanisch entkoppelte Schnittstelle, insbesondere eine induktive Schnittstelle. Messgeräte mit solchen Schnittstellen werden von der Anmelderin unter der Bezeichnung "Memosens" vertrieben. Deren Prinzip ist beispielsweise in der Europäischen Patentanmeldung Nr. 01124304 beschrieben.

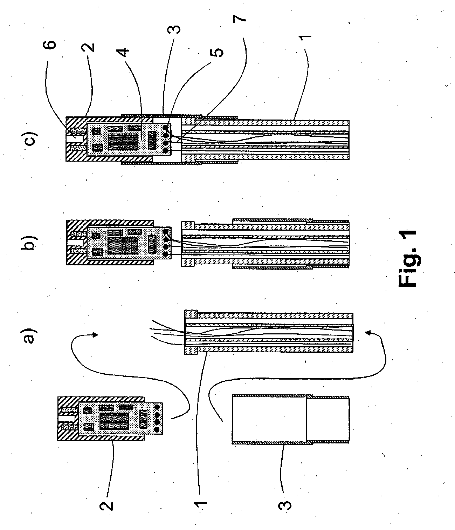

Die Erfindung wird nun anhand von dem in der Zeichnung dargestellten Ausführungsbeispiel erläutert.

Es zeigt:

Fign. Ia - I c: Eine Abfolge der Montageschritte zur Herstellung eines erfindungsgemäßen modularen pH-Messgerätes.

Das in Fign. Ia bis I c. gezeigte pH-Messgerät umfasst als Sensormodul eine Einstabmesskette 1 mit zwei koaxial angeordneten Glasrohren zur Ausbildung der pH-Halbzelle und der Referenzhalbzelle. Weiterhin umfasst das Messgerät ein Elektronikmodul 2, welches mittels seiner Kopplungshülse 3 mit dem Sensormodul 1 zu verbinden ist. Das Elektronikmodul 2 enthält in einer Elektronikkapsel eine Öffnung, in welcher eine Leiterkarte 4 angeordnet ist, welche Funktionalitäten zur Verarbeitung der Analogsignale des Sensormoduls enthält, dessen Leitungen 7 an Kontaktpunkten 5 anzuschließen sind. Weiterhin enthält das Elektronikmodul eine induktive Schnittstelle 6 zum Austausch von Daten und Empfangen von Energie über ein moduliertes AC-Signal. Zur Montage des pH-Messgeräts wird das Elektronikmodul 2 zunächst axial fluchtend mit dem Sensormodul positioniert. Zudem wird die Hülse 3 auf das Gehäuse des Sensormoduls aufgeschoben. Hier dient der Schaft der Einstabmesskette direkt als Gehäuse. Es kann aber in dem prozessabgewandten Endabschnitt des Sensormoduls zusätzlich ein gesondertes Kunststoffgehäuse vorgesehen sein, auf welches die Hülse aufgeschoben wird. Auch dieses kann geschirmt sein.

Nach der Positionierung der Module zueinander werden die Anschlussleitungen 7 des Sensormoduls 1 an den Kontaktpunkten 5 der Leiterkarte 4 des Sensormoduls 2 angebracht, beispielsweise durch Löten oder Schweißen. Die Leiterkarte ragt aus dem Gehäuse des Elektronikmoduls heraus, damit die Kontaktpunkte 5 einfach zugänglich sind, und die Leitungen automatisch angeschlossen werden können.

Im nächsten Verfahrensschritt wird die Hülse 3 in ihre endgültige Position verschoben und sowohl am Gehäuse des Elektronikmoduls 2 als auch am Gehäuse des Sensormoduls 1 befestigt, beispielsweise durch Verkleben oder (Ultraschall-)Schweißen. Auf diese Weise werden die beiden Module fest miteinander verbunden. Das von der Hülse 3 eingeschlossene Volumen

zwischen dem Sensormodul 1 und dem Elektronikmodul wird schließlich durch eine hier nicht dargestellte Öffnung, mit einer Vergussmasse befüllt.

Die Elektronikkapsel des Elektronikmoduls 2 weist außer in dem Bereich Buchse der induktiven Schnittstelle eine erfindungsgemäße Schirmung auf, die einen bei der Herstellung des Kapselkörpers eingegossenen Metallkäfig umfasst. Gleichermaßen weist die Kopplungshülse 3 eine integrale Schirmung auf. Kontakt der Schirmungen beispielsweise mit der Schaltungsmasse des Elektronikmoduls wird durch eine mit einem leitenden Material verfüllte Querbohrung im überlappenden Bereich der schirmenden Bauteile bewirkt. Damit sind die Schaltungen auf der Leiterkarte und das hochohmige Primärsignal des pH-Sensors effektiv und mit geringem Aufwand geschirmt.

## Patentansprüche

1. Modulares Messgerät, umfassend ein zumindest abschnittsweise zylindrisches Sensormodul (1) mit mindestens einem Sensor zum Ausgeben eines messgrößenabhängigen elektrischen Primärsignals an einen Sensorausgang (7);
ein zumindest abschnittsweise zylindrisches Elektronikmodul (2) mit einem sensorseitigen Eingang (5), der mittels einer elektrischen Verbindung an den Sensorausgang angeschlossen ist, wobei das Elektronikmodul ein Gehäuse umfasst, das einen elektrisch nicht leitenden Kunststoff aufweist, wobei das Sensormodul (1) und das Elektronikmodul (2) mittels des Gehäuses miteinander verbunden sind,
wobei integral mit dem Gehäuse eine Schirmung vorgesehen ist,
und wobei das Gehäuse zweiteilig ausgebildet ist, und eine Elektronikkapsel und eine Kopplungshülse (3) umfasst, und wobei die Kopplungshülse jeweils einen Endabschnitt der Elektronikkapsel und des Sensormoduls umschließt
und wobei die Elektronikkapsel und die Kopplungshülse eine integrale Schirmung aufweisen.

2. Messgerät nach Anspruch 1, wobei die Schirmung einen geschlossenen oder durchbrochenen leitfähigen Film aufweist.

3. Messgerät nach Anspruch 2, wobei der leitfähige Film an der Gehäuseinnenwand aufgebracht ist.

4. Messgerät nach Anspruch 2, wobei der leitfähige Film als eine Zwischenlage zwischen zwei bestimmungsgemäß nicht zu trennenden Kunststoffschichten der Gehäusewand angeordnet ist.

5. Messgerät nach Anspruch 1, wobei die Schirmung einen Metallkäfig umfasst, der von Kunststoff umgossen ist.

6. Messgerät nach einem der Ansprüche 1 bis 5, wobei zur Kontaktierung einer von Kunststoff abgedeckten Schirmung eine Bohrung durch die Wand bzw. ein Sackloch vorgesehen ist.

7. Messgerät nach einem der Ansprüche 1 bis 6, wobei das Sensormodul einen potentiometrischen Sensor, einen amperometrischen Sensor, einen photometrischen Sensor, einen spektrometrischen Sensor, einen Trübungssensor, einen Leitfähigkeitssensor, einen Drucksensor oder einen Temperatursensor umfasst.

8. Messgerät nach Anspruch 7, wobei der potentiometrische Sensor insbesondere eine pH-Elektrode, eine Referenzelektrode, eine Einstabmesskette oder einen ISFET-Sensor umfasst.

9. Messgerät nach einem der vorhergehenden Ansprüche, wobei das Elektronikmodul einen A/D-Wandler, einen Mikroprozessor zur Aufbereitung von digitalisierten Signalen des Sensormoduls und eine Schnittstelle zur digitalen Kommunikation mit einer übergeordneten Einheit aufweist.

## Claims

1. Modular measuring device comprising a sensor module (1) that is cylindrical at least in part with at least one sensor for outputting an electrical primary signal to a sensor output (7), said signal being dependent on a measured variable;
an electronic module (2) that is cylindrical at least in part with an input (5) on the sensor side, said input being connected to the sensor output via an electrical connection, wherein the electronic module comprises a housing that has a material that does not conduct electricity, wherein the sensor module (1) and the electronic module (2) are interconnected by means of the housing,
wherein a shielding is provided integrally with the housing,
and wherein the housing has a two-part design and comprises an electronic capsule and a coupling sleeve (3) and wherein the coupling sleeve surrounds an end section of the electronic capsule and of the sensor module
and wherein the electronic capsule and the coupling sleeve have an integral shielding.

2. Measuring device as claimed in Claim 1, wherein the shielding has a closed or open conductive film.

3. Measuring device as claimed in Claim 2, wherein the conductive film is applied to the inner wall of the housing.

4. Measuring device as claimed in Claim 2, wherein the conductive film is arranged as an intermediate layer between two plastic layers of the housing wall that, in accordance with specifications, are not to be separated.

5. Measuring device as claimed in Claim 1, wherein the shielding comprises a metal cage that is cast in plastic.

6. Measuring device as claimed in one of the Claims 1 to 5, wherein a bore hole through the wall or a blind hole is provided for the purposes of establishing contact with a shielding covered by plastic.

7. Measuring device as claimed in one of the Claims 1 to 6, wherein the sensor module comprises a potentiometric sensor, an amperometric sensor, a photometric sensor, a spectrometric sensor, a turbidity sensor, a conductivity sensor, a pressure sensor or a temperature sensor.

8. Measuring device as claimed in Claim 7, wherein the potentiometric sensor comprises in particular a pH electrode, a reference electrode, a single-rod measuring chain or an ISFET sensor.

9. Measuring device as claimed in one of the previous claims, wherein the electronic module has an A/D converter, a microprocessor for processing digital signals of the sensor module, and an interface for digital communication with a higher-order unit.

## Revendications

1. Appareil de mesure modulaire comprenant un module capteur (1) au moins partiellement cylindrique, avec au moins un capteur destiné à délivrer à une sortie capteur (7) un signal primaire électrique dépendant de la grandeur de mesure ;
un module électronique (2) au moins partiellement cylindrique avec une entrée (5) côté capteur, laquelle est raccordée au moyen d'une connexion électrique à la sortie capteur, le module électronique comprenant un boîtier en plastique non électroconducteur, le module capteur (1) et le module électronique (2) étant reliés entre eux au moyen du boîtier,
un blindage intégral étant prévu avec le boîtier,
et le boîtier étant formé de deux parties, et comprenant une capsule électronique et une douille de couplage (3), et la douille de couplage renfermant respectivement une extrémité de la capsule électronique et le module capteur
et la capsule électronique et la douille de couplage présentant un blindage intégral.

2. Appareil de mesure selon la revendication 1, pour lequel le blindage présente un film conducteur fermé ou ajouré.

3. Appareil de mesure selon la revendication 2, pour lequel le film conducteur est appliqué sur la paroi intérieure du boîtier.

4. Appareil de mesure selon la revendication 2, pour lequel le film conducteur est disposé en tant que couche intermédiaire entre deux couches de plastique de la paroi de boîtier, inséparables conformément aux prescriptions.

5. Appareil de mesure selon la revendication 1, pour lequel le blindage comprend une cage métallique, laquelle est enrobée de plastique.

6. Appareil de mesure selon l'une des revendications 1 à 5, pour lequel est prévu, pour l'établissement du contact d'un blindage recouvert de plastique, un perçage à travers la paroi ou un trou borgne.

7. Appareil de mesure selon l'une des revendications 1 à 6, pour lequel le module capteur comprend un capteur potentiométrique, un capteur ampérométrique, un capteur photométrique, un capteur spectrométrique, un capteur de turbidité, un capteur de conductivité, un capteur de pression ou un capteur de température.

8. Appareil de mesure selon la revendication 7, pour lequel le capteur potentiométrique comprend notamment une électrode ph, une électrode de référence, une électrode combinée ou un capteur ISFET.

9. Appareil de mesure selon l'une des revendications précédentes, pour lequel le module électronique est un convertisseur A/N, un microprocesseur destiné au traitement des signaux numérisés du module capteur et une interface destinée à la communication numérique avec une unité maître.
